Europäisches Patentamt

European Patent Office

Office européen des brevets

(19)

(11) Veröffentlichungsnummer: **0 029 021**
A1

(12) **EUROPÄISCHE PATENTANMELDUNG**

(21) Anmeldenummer: 80890130.0

(22) Anmeldetag: 06.11.80

(51) Int. Cl.³: **C 08 J 9/32**
C 08 J 9/34, C 08 L 75/04
A 43 B 13/04

(30) Priorität: 08.11.79 AT 7172/79

(43) Veröffentlichungstag der Anmeldung:
20.05.81 Patentblatt 81/20

(84) Benannte Vertragsstaaten:
DE FR GB IT SE

(71) Anmelder: Schaefer, Philipp
Oberstrasse 16
D-3000 Hannover 1(DE)

(72) Erfinder: Schaefer, Philipp
Oberstrasse 16
D-3000 Hannover 1(DE)

(72) Erfinder: Kosara, Mirjam, Dipl.-Ing.
Hauptstrasse 16
A-3541 Senftenberg(AT)

(74) Vertreter: Boeckmann, Peter, Dipl.Ing. et al,
Strohgasse 10
A-1030 Wien(AT)

(54) Formteil aus Polyurethan und Verfahren zur Herstellung des Formteiles.

(57) Formteil aus Polyurethan mit einer zelligen Struktur (2), beispielsweise eine Schuhsohle, wobei in dem Polyurethan druckelastische Mikrohohlukugeln (1) eingeschlossen sind, deren dünne Hülle aus einem thermoplastischen Copolymeren besteht und deren Inneres ein Gas enthält.

Die Formteile können entweder nach einem Verfahren hergestellt werden, bei welchem die das Polyurethan bildenden Komponenten, nämlich das Polyol, dem die Mikrohohlkugeln beigemengt werden, und das Isocyanat gegebenenfalls mit Zusätzen vermischt und unmittelbar darauf in eine Form eingegeben werden. Es können aber auch die Mikrohohlkugeln in situ hergestellt werden.

FIG.1

Formteil aus Polyurethan und
Verfahren zur Herstellung des Formteiles

Die Erfindung betrifft einen Formteil aus elastischem Polyurethan mit einer zelligen Struktur, beispielsweise eine Schuhsohle, sowie ein Verfahren zur Herstellung eines solchen Formteiles.

Formteile aus elastischem Polyurethan mit offenen Zellen oder mit geschlossenen und offenen Zellen sind bereits bekannt und werden beispielsweise für Schuhsohlen verwendet. Bei der Herstellung derartiger Formteile wird so vorgegangen, daß die das Polyurethan bildenden Komponenten, nämlich Polyol und Isocyanat gegebenenfalls mit Zusätzen wie Aktivatoren, Treibmittel od.dgl. in einer Mischkammer oder auf andere Art und Weise vermischt und von dort in eine Gießform eingegeben werden, wo die Reaktion zur Bildung des Polyurethans in der Regel bei Anwesenheit von Wasser erfolgt. Durch die bei der Reaktion beim Vorhandensein von Wasser freiwerdende Kohlensäure entsteht hiebei die zellige Struktur des Polyurethans. Die Bildung dieser zelligen bzw. schaumartigen Struktur kann noch unterstützt bzw. beeinflußt werden durch Beigabe von flüssigen Treibmitteln mit einem niedrigen Siedepunkt, wie beispielsweise fluorierten Kohlenwasserstoffen in einer Menge von ca. 2 bis 5 %, oder durch Beimengung von festen oder angeteigten Treibmitteln, die bei Hitze zerfallen und ein Gas bilden, wie beispielsweise Azodicarbonamid. Die beigemengten fluorierten Kohlenwasserstoffe entweichen bei der Herstellung des Formteiles in die Atmosphäre und bilden dort eine

- 2 -

schädliche Gasschicht, so daß die Verwendung dieser fluorierten Kohlenwasserstoffe in den USA bereits verboten wurde. Es ist auch bekannt, Formteile aus Schlagschäumen herzustellen. Hiebei wird Luft oder ein anderes trockenes Gas mechanisch vor der Verfestigung eingebracht.

In allen Fällen kann das die zellige bzw. schaumartige Struktur bildende Gas zumindest während des Beginnes des Reaktionsprozesses zwischen den das Polyurethan bildenden Komponenten leicht entweichen, wodurch Störungen in der schaumartigen bzw. zelligen Struktur und vor allem auch in der Außenhaut des Polyurethan-Formteiles entstehen.

Für die Herstellung von Formteilen mit der gewünschten zelligen Struktur und einer formschönen Außenhaut ist die exakte Einhaltung zahlreicher Kriterien wesentlich. So müssen die Form und die das Polyurethan bildenden Komponenten eine ganz bestimmte Temperatur aufweisen und es muß, falls die Schaumbildung durch Kohlensäure erfolgt, ein ganz bestimmter Anteil an Wasser vorhanden sein, damit die Reaktion in der gewünschten Weise abläuft. Ist beispielsweise die Viskosität des aus den Komponenten gebildeten Gemisches während der Gasabspaltung noch zu niedrig, so kommt es zu einer Deformation des Formteiles durch Einfallen des Schaumes.

Vor allem dann, wenn die Formteile Fehler wie Einfallstellen, eine ungleichmäßige Zellstruktur oder Löcher und Blasen an der Außenhaut aufweisen, sind sie überhaupt nicht mehr oder nur höchstens für Waren zweiter Wahl verwendbar.

Es sind auch Formteile aus sogenannten Integralschäumen bekannt, die eine kompakte Außenhaut besitzen und bei welchen die Gefahr des Entstehens von Fehlern in dieser Außenhaut daher geringer ist. Derartige Integralschäume werden dadurch hergestellt, daß bestimmte flüssige Treibmittel verwendet werden, die erst während der Wärmeentwicklung bei der Reaktion verdampfen. Durch die Ableitung der Reaktionswärme im Kontaktbereich der kühleren Form bildet sich eine feste Außenhaut. Nachteilig ist bei den aus solchen Integralschäumen bestehenden Formteilen, daß sie eine große Dichte aufweisen und daß ihre Außenhaut glatt ist, wodurch sie ein unschönes, plastikartiges Aussehen besitzt, sich unangenehm anfühlt und außerdem bei Verwendung für Schuhsohlen die Gefahr eines Ausrutschens wesentlich vergrößert wird. Bei Polyurethan-Formteilen mit einer dünnen Außenhaut treten diese Nachteile nicht auf, dafür ist jedoch beispielsweise bei Verwendung für Schuhsohlen die Außenhaut rasch abgenutzt und es tritt dann die zellige Innenstruktur des Formteiles zutage, die wie ein Schwamm wirkt und daher Wasser und Schmutz aufnimmt und lang zurückbehält. Dies ist bei Verwendung solcher Formteile für Schuhsohlen nicht nur deshalb nachteilig, da auch bei sorgfältiger Reinigung durch aufgesaugtes schmutziges Wasser Tritte auf sauberen Fußböden verursacht werden, sondern das aufgesaugte Wasser zerstört bei Wärmeeinwirkung durch Hydrolyse innerhalb kurzer Zeit die dünnen Membranwände der Zellen, insbesondere dann, wenn das Polyurethan aus einem Polyol auf Polyesterbasis hergestellt wurde.

Ein wesentlicher Nachteil aller bekannten Polyurethan-Formteile besteht weiters darin, daß die Dichte dieser Formteile hoch sein muß, damit die Formteile den mechanischen Beanspruchungen gewachsen sind. Diese Dichte kann somit nicht wesentlich reduziert werden, ohne daß es bei häufigen Druckbe- und -entlastungen zu bleibenden Deformationen kommt und ohne daß die Schaumstruktur und/oder die Außenhaut Fehler aufweist.

Ein weiterer Nachteil bei der Herstellung der bekannten Polyurethan-Formteile besteht darin, daß eine relativ geringe Menge der Reaktionskomponenten in die Form gefüllt wird, wobei dann durch Schaumbildung die Form ausgefüllt wird und im Anschluß daran eine Verfestigung stattfindet. Bei komplizierten Formen kommt es nun während der Schaumbildung häufig zu einem Überrollen des Schaumes, wodurch störende Lunker gebildet werden. Je niedriger die Dichte des fertigen Schaumes ist, umso geringer ist das Volumen der eingebrachten Komponenten und umso größer ist die Gefahr des Überrollens des Schaumes während des Expandierens.
Bei komplizierten Formteilen hilft auch das bekannte Vorschäumen mittels Difluordichlormethan (Kp:-30°C), bei welchem das Reaktionsgemisch als sahnige Masse die Mischkammer verläßt und in der Form weiter aufschäumt, wenig, weil
die vorgeschäumten Reaktionspartner schlechte Fließeigenschaften aufweisen.

Die vorliegende Erfindung hat sich zur Aufgabe gestellt, die erwähnten Nachteile zu vermeiden und einen
Formteil aus elastischem Polyurethan zu schaffen, der eine
niedrige Dichte und ein geringes Gewicht besitzt, jedoch
hochelastisch und stark beanspruchbar ist und bei deren
Herstellung keine Fehler entstehen. Die Erfindung geht hiebei aus von einem Formteil der eingangs beschriebenen Art
und besteht im wesentlichen darin, daß im Polyurethan druckelastische Mikrohohlkugeln eingeschlossen sind, deren dünne
Hülle aus einem thermoplastischen Copolymeren besteht und
deren Inneres ein Gas enthält. Die Mikrohohlkugeln weisen
zweckmäßig unterschiedlichen Durchmesser auf, der 0,003
bis 0,35, vorzugsweise 0,05 bis 0,1 mm beträgt. Eine Beschreibung geeigneter Mikrohohlkugeln findet sich in der
Zeitschrift "Modern Plastics", August 1969, Seite 55.Durch
die Anordnung derartiger Mikrohohlkugeln kann die Dichte
des Polyurethans-Formteiles wesentlich herabgesetzt werden,
ohne daß bei ständigem Druckbe- und -entlasten bleibende
Deformationen entstehen. Vielmehr bleiben die Staucheigenschaften und auch die Shorehärte bei den erfindungsgemäß
ausgebildeten Formteilen erhalten. Darüber hinaus wird durch
die Beimengung der Mikrohohlkugeln eine äußerst gleichmäßige, feine Schaumstruktur erzielt, wie dies bisher nur mit
Schäumen von sehr hoher Dichte erreicht werden konnte. Vor
allem weist auch die Außenhaut der erfindungsgemäßen Formteile nicht nur ein schönes, sich angenehm anfühlendes Aussehen auf, sondern besitzt auch die erforderliche mechanische Festigkeit, wobei auch eine unerwünschte Wasseraufnahme erheblich reduziert wird. Ein weiterer Vorteil des erfindungsgemäßen Formteils besteht darin, daß sich die aus einem thermoplastischen Copolymeren bestehenden dünnen Hüllen der Mikrohohlkugeln untrennbar mit dem elastischen Polyurethan verbinden und im Formteil zusätzlich geschlossene Zellen bilden und zwar an denjenigen Stellen, wo die Anordnung solcher zusätzlich geschlossener Zellen besonders wichtig ist, nämlich im Inneren des Formkörpers neben den offenen Polyurethanzellen und in der kompakten Haut bei Anwendung von Integralschäumen. Werden die erfindungsgemäßen Formteile aus solchen Integralschäumen auf bekannte Weise hergestellt, so besitzen sie eine kompakte, aus geschlossenen Zellen bestehende, kein Wasser aufnehmende Außenhaut, wobei durch die auch in der Außenhaut befindlichen Mikrohohlkugeln nicht nur ein schönes, sich angenehm anfühlendes Aussehen der Außenhaut erzielt wird, sondern auch deren Rutschfestigkeit wesentlich erhöht wird. Vor allem bei solchen Integralschäumen ist die Verwendung von Mikrohohlkugeln unterschiedlichen Durchmessers besonders vorteilhaft, da die Lücken zwischen den größeren Mikrohohlkugeln von den kleineren Mikrohohlkugeln ausgefüllt werden, so daß die dicke Außenhaut dann fast zur Gänze aus Mikrohohlkugeln besteht.

Bei den erfindungsgemäßen Formteilen wird weiters der Materialbedarf für die Herstellung des Polyurethanschaumes verringert, da ja das Volumen der erfindungsgemäßen Formteile zum Teil aus den Mikrohohlkugeln besteht. Dadurch können die Rohstoffverknappungen und -verteuerungen teilweise kompensiert werden. Außerdem kann bei der Herstellung der erfindungsgemäßen Formteile mit wesentlich geringeren Mengen von fluorierten Kohlenwasserstoffen das Auslangen gefunden werden, wodurch eine Beeinträchtigung der Atmosphäre durch diese fluorierten Kohlenwasserstoffe kaum mehr erfolgt.

Vorzugsweise besteht die Hülle der Mikrohohlkugeln aus Vinylidenchlorid-Copolymerisat. Es hat sich gezeigt, daß Mikrohohlkugeln mit einer solchen Hülle das im Inneren befindliche Gas am besten zurückhalten und auch bei Druckbelastung am Entweichen verhindern.

Ein Verfahren zur Herstellung der erfindungsgemäßen Formteile geht aus vom bekannten Verfahren, bei welchem die das Polyurethan bildenden Komponenten Polyol und Isocyanat gegebenenfalls mit Zusätzen wie Aktivatoren, Treibmittel od.dgl. vermischt und unmittelbar darauf in eine Form eingegeben werden und besteht darin, daß dem Polyol vor dem Vermischen die Mikrohohlkugeln beigemengt werden. Es hat sich gezeigt, daß die verwendeten Mikrohohlkugeln resistent sind sowohl gegenüber dem Polyol als auch gegenüber dem Isocyanat und daß diese Mikrohohlkugeln auch beim Vermischen des Polyols mit dem Isocyanat in einem bekannten Mischkopf bzw. in einer bekannten Mischkammer nicht beschädigt werden. Durch die Beimengung der Mikrohohlkugeln erfolgt eine Reduzierung der Dichte der das Polyurethan bildenden Komponenten, wodurch es möglich wird, auch bei Formteilen mit niedriger Dichte ein großes Volumen an Flüssigkeit in die Form einzubringen, ohne daß dabei die bisher auftretenden Schaumüberrollungen entstehen. Es hat sich gezeigt, daß durch die Beimengung der Mikrohohlkugeln der Polyurethanschaum in der Form viel leichter steigt, weniger zum Kollabieren neigt und die so hergestellten Formteile, wie an Hand von Schleifversuchen festgestellt wurde, eine überaus feine, gleichmäßige Zellstruktur besitzen.

Erfindungsgemäß können dem Polyol 0,01 bis 9 Gew.-%, vorzugsweise 0,4 bis 3,5 Gew.-%, Mikrohohlkugeln beigemengt werden. Bei 25°C hat das Polyol ohne Beimengung von Mikrohohlkugeln eine Dichte von ca. 1,05 und eine Viskosität von ca. 700 cp. Bei Beimengung von 1 Gew.-% Mikrohohlkugeln zum Polyol ergibt sich eine Dichte von ca. 0,83 und eine Viskosität von ca. 3600 cp, bei Beimengung von 2 Gew.-% Mikrohohlkugeln ergibt sich eine Dichte von ca. 0,68 bei nahezu gleichbleibender Viskosität von ca.3600 cp.

Es kann aber auch ein erfindungsgemäßer Formteil nach einem anderen erfindungsgemäßen Verfahren hergestellt werden. Bei diesem Verfahren wird wieder vom bekannten Verfahren ausgegangen, bei welchem die das Polyurethan bildenden Komponenten Polyol und Isocyanat gegebenenfalls mit Zusätzen wie Aktivatoren, Treibmittel od.dgl. vermischt und unmittelbar darauf in eine Form eingegeben werden, wobei das erfindungsgemäße Verfahren dadurch gekennzeichnet ist, daß dem Polyol vor dem Vermischen Teilchen aus thermoplastischen Copolymeren, die ein Treibmittel enthalten, beigemengt werden, und daß die Mikrohohlkugeln aus diesen Teilchen durch Wärmezufuhr in situ gebildet werden. Bei Anwendung dieses Verfahrens bilden sich ebenfalls Mikrohohlkugeln mit unterschiedlicher Größe von 0,003 mm bis 0,35 mm, vorzugsweise von 0,05 bis 0,1 mm, wobei auch diese Bläschen druckelastisch sind, eine dünne Hülle aus dem thermoplastischen Copolymeren aufweisen und mit einem Gas gefüllt sind. Auch bei Anwendung dieses Verfahrens ergeben sich die gleichen Vorteile, wie sie bei der Beimengung fertiger Mikrohohlkugeln zum Polyol entstehen. Insbesondere wird auch die Dichte des Polyols und damit der daraus hergestellten Formteile in der gewünschten Weise verringert.

Bei einer bevorzugten Ausführungsform des erfindungsgemäßen Verfahrens werden hiebei die Mikrohohlkugeln im Polyol vor dem Vermischen desselben mit dem Isocyanat in situ gebildet. Hiebei wird zweckmäßig treibmittelfreies Polyol verwendet, welches auf eine Temperatur erwärmt wird, bei welcher sich die Mikrohohlkugeln aus den thermoplastischen Copolymeren-Teilchen, die ein Treibmittel enthalten, bilden. Die Temperatur liegt hiebei zwischen 65°C und 165°C, vorzugsweise zwischen 92°C und 114°C. Bei dieser Vorgangsweise werden die das Treibmittel enthaltenden Copolymeren-Teilchen in der gewünschten Menge zwischen 0,01 und 9 Gew.-% unter Umrühren dem Polyol beigemengt. Unmittelbar nach dem Einrühren der das Treibmittel enthaltenden Copolymeren-Teilchen bilden sich aus diesen die Mikrohohlkugeln im Polyol, wobei durch eine Umlaufpumpe das Entmischen zwischen dem Polyol und den Mikrohohlkugeln verhindert wird. Nach dem Abkühlen können dem Polyol gegebenenfalls die Treibmittel wie niedrigsiedende Lösungsmittel und/oder Wasser sowie Aktivatoren beigemischt werden.

Um eine gleichmäßige Verteilung der Mikrohohlkugeln im Formteil sicherzustellen, ist es von Vorteil, wenn gemäß einem weiteren Verfahrensschritt das Polyol mit den Mikrohohlkugeln bzw. mit den die Mikrohohlkugeln bildenden Teilchen aus thermoplastischen Copolymeren umgewälzt oder umgerührt werden, wobei das Umwälzen mittels einer Umlaufpumpe und das Umrühren mittels eines geeigneten Rührwerkes durchgeführt werden kann.

Gemäß einem weiteren Verfahrensschritt können erfindungsgemäß in die Form Verstärkungselemente, beispielsweise aus Metall, eingelegt werden. Dadurch kann die Festigkeit des Formteiles erhöht werden. Weiters ist es möglich, bei Anwendung des erfindungsgemäßen Verfahrens den eine Schuhsohle bildenden Formteil unmittelbar an den Schuhoberteil anzuschäumen. Da beim erfindungsgemäßen Formteil die Ausschußquote wesentlich verringert wird, kann ein solcher Verfahrensschritt durchgeführt werden, ohne daß die Gefahr besteht, daß beim Anschäumen des Schuhoberteils bei einer fehlerhaften Schuhsohle der gesamte Schuh eine Ausschußware darstellt.

Im folgenden wird die Herstellung eines erfindungsgemäßen Formteiles an Hand eines Beispieles näher erläutert.

100 Teile Polyol, welches auch Treibmittel und Aktivatoren enthält, auf Ätherbasis mit einem Molgewicht zwischen 3000 bis 6000, einer Viskosität von ca. 700 cp und einer Dichte von ca. 1,05 wurde mit 53 Teilen Isocyanat in einem Mischkopf vermischt. Vor dem Vermischen wurden Mikrohohlkugeln in einer Menge von 2 Gew.-%, bezogen auf das Polyol, beigemengt. Nach der Beimengung der Mikrohohlkugeln betrug die Viskosität ca. 3600 cp. Die Mischung wurde in eine auf 40°C erwärmte Schuhsohlenform gefüllt. Nach 5 Minuten erfolgte die Entformung der Sohle.

Die so geformte Sohle wies eine Dichte von 0,36 auf. Bei Schleifversuchen wurde festgestellt, daß die so geformte Sohle eine feine und gleichmäßige Zellstruktur besitzt.

Die Mikrohohlkugeln bildeten beim Formvorgang im expandierenden Schaum gleichsam ein Gerüst und verhinderten das Zusammenfallen. Bei einem Biegetest nach DIN 53522 (mit Einstich) hielt die Sohle 30.000 Biegungen aus und bei einem Härtetest ergab sich eine Härte von ca. 50 Shore. Diese Werte entsprechen den Werten bei bisher bekannten Sohlen, trotzdem diese eine wesentlich höhere Dichte von ca. 0,55 besitzen.

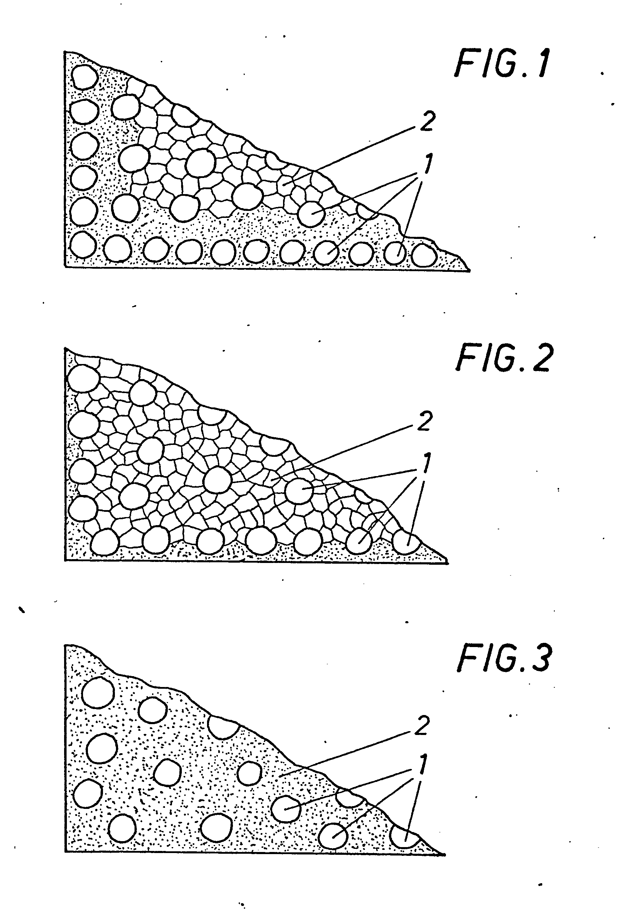

Die Zeichnung zeigt in Fig.1 die Struktur eines erfindungsgemäßen, aus einem Integralschaum gebildeten Formteiles, in Fig.2 die Struktur eines erfindungsgemäßen Formteiles mit einer Haut erhöhter Dichte und in Fig.3 die Struktur eines erfindungsgemäßen Formteiles ohne eine solche Haut, der ohne Beifügung eines Treibmittels hergestellt wurde. In den Fig.1 und 2 sind mit 1 die Mikrohohlkugeln, mit 2 die überwiegend offenzellige Schaumstruktur bezeichnet.

Patentansprüche:

1. Formteil aus Polyurethan mit einer zelligen Struktur, beispielsweise Schuhsohle, dadurch gekennzeichnet, daß im Polyurethan druckelastische Mikrohohlkugeln (1) eingeschlossen sind, deren dünne Hülle aus einem thermoplastischen Copolymeren besteht und deren Inneres ein Gas enthält.

2. Formteil nach Anspruch 1, dadurch gekennzeichnet, daß die Mikrohohlkugeln unterschiedlichen Durchmesser aufweisen.

3. Formteil nach Anspruch 1 oder 2, dadurch gekennzeichnet, daß der Durchmesser der Mikrohohlkugeln zwischen 0,003 und 0,35 mm, vorzugsweise zwischen 0,05 und 0,1 mm beträgt.

4. Formteil nach Anspruch 1, dadurch gekennzeichnet, daß die Hülle der Mikrohohlkugeln aus Vinylidenchlorid-Copolymerisat besteht.

5. Verfahren zur Herstellung eines Formteiles nach Anspruch 1, wobei die das Polyurethan bildenden Komponenten Polyol und Isocyanat gegebenenfalls mit Zusätzen wie Aktivatoren, Treibmittel od.dgl. vermischt und unmittelbar darauf in eine Form eingegeben werden, dadurch gekennzeichnet, daß dem Polyol vor dem Vermischen die Mikrohohlkugeln beigemengt werden.

6. Verfahren nach Anspruch 5, dadurch gekennzeichnet, daß dem Polyol 0,01 bis 9 Gew.-%, vorzugsweise 0,4 bis 3,5 Gew.-%, Mikrohohlkugeln beigemengt werden.

7. Verfahren zur Herstellung eines Formteiles nach Anspruch 1, wobei die das Polyurethan bildenden Komponenten Polyol und Isocyanat gegebenenfalls mit Zusätzen wie Aktivatoren, Treibmittel od.dgl. vermischt und unmittelbar darauf in eine Form eingegeben werden, dadurch gekennzeichnet, daß dem Polyol vor dem Vermischen Teilchen aus thermoplastischen Copolymeren, die ein Treibmittel enthalten, beigemengt werden, und daß die Mikrohohlkugeln aus diesen Teilchen durch Wärmezufuhr in situ gebildet werden.

8. Verfahren nach Anspruch 7, dadurch gekennzeichnet,

- 2 -

daß die Mikrohohlkugeln im Polyol vor dem Vermischen desselben mit dem Isocyanat in situ gebildet werden.

9. Verfahren nach einem der Ansprüche 5 bis 8, dadurch gekennzeichnet, daß die Komponenten mit den Mikrohohlkugeln bzw. mit den die Mikrohohlkugeln bildenden
Teilchen aus thermoplastischen Copolymeren umgewälzt oder
umgerührt werden.

10. Verfahren nach einem der Ansprüche 5 bis 9, dadurch gekennzeichnet, daß in die Form Verstärkungselemente, beispielsweise aus Metall, eingelegt werden.

11. Verfahren nach einem der Ansprüche 5 bis 10, dadurch gekennzeichnet, daß der eine Schuhsohle bildende
Formteil unmittelbar an den Schuhoberteil angeschäumt
wird.

FIG.1

FIG.2

FIG.3

**Europäisches Patentamt**

## EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | <u>US - A - 4 038 238</u> (T.E. CRAVENS)<br>* Das ganze Dokument * | 1-4,7 | C 08 J 9/32<br>9/34<br>C 08 L 75/04<br>A 43 B 13/04 |
| | -- | | |
| | <u>US - A - 3 509 079</u> (M.A. HYDE et al.)<br>* Anspruch 1; Beispiel 3; Spalte 1, Zeile 67 bis Spalte 2, Zeile 8 *<br>& DE - A - 2 007 446 | 1,2,5,7 | |
| | -- | | **RECHERCHIERTE SACHGEBIETE** (Int. Cl.³) |
| A | <u>GB - A - 1 103 236</u> (TOYO RUBBER)<br>& CH - A - 455 571 | 10,11 | C 08 J 9/00<br>9/32<br>9/34<br>B 29 C 6/00<br>A 43 B 13/04 |
| | -- | | |
| A | <u>FR - A - 1 335 317</u> (DUNLOP) | 7 | |
| A | <u>DE - A - 2 007 218</u> (DOW CHEMICAL) | 1,7 | |
| | -- | | |
| | JOURNAL OF CELLULAR PLASTICS, Band 5, Nr. 5, 1969, Technomic Publishing Co., Stamford, Conn, US, H. WIRTZ: "Integral skin urethane foam molding", Seiten 304-309<br>* Seite 308; Figur 9 * | 11 | |
| | ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-02-1981 | HALLEMEESCH |

EPA form 1503.1 06.78